# FASCICULE DE BREVET EUROPEEN

(11) **EP 0 794 108 B1**
(45) Date de publication et mention de la délivrance du brevet: **29.03.2000**
(21) Numéro de dépôt: 97400072.1
(22) Date de dépôt: 15.01.1997
(51) Int. Cl.: B62D 43/04

(54) **Adaptateur d'immobilisation d'une roue de secours de type galette dans un logement de roue normale**
Anpassungsteil zum Fixieren eines kleineren Notrades anstelle eines Rades mit Standardgrösse an einem Kraftfahrzeug
Adapter for fixing a narrower spare tyre at the place of a standard sized tyre of an automobile

(30) Priorité: 06.03.1996 FR 9602831
(43) Date de publication de la demande: 10.09.1997
(73) Titulaire: AUTOMOBILES PEUGEOT, 75116 Paris (FR); AUTOMOBILES CITROEN, 92200 Neuilly-sur-Seine (FR)
(72) Inventeur: Stée, Lucien, 91700 Sainte Geneviève des Bois (FR)
(74) Mandataire: Lanceplaine, Jean-Claude

(56) Documents cités:
- EP-A- 0 201 414
- FR-A- 1 092 433
- FR-A- 2 675 762

## Description

La présente invention a pour objet un adaptateur destiné à immobiliser une roue de secours du type galette, pour véhicule automobile, dans un logement prévu pour recevoir et immobiliser une roue normale.

Pour des raisons d'allégement et d'économie, les constructeurs automobiles fournissent parfois les véhicules avec une roue de secours du type galette, c'est à dire dont la partie formant le pneumatique est axialement moins large et radialement moins épaisse que le pneumatique d'une roue normale utilisée dans les conditions normales de déplacement du véhicule.

Par ailleurs, la jante d'une telle roue de type galette est axialement moins large qu'une roue normale et possède un diamètre plus grand que la jante de la roue normale afin d'obtenir un diamètre hors tout de la roue de type galette sensiblement égal à celui d'une roue normale gonflée.

En cas de crevaison, la roue de type galette est retirée de son logement, puis une roue crevée de type normal est insérée et maintenue dans le logement.

Par conséquent, le logement doit être dimensionné pour recevoir une roue de type normal.

Le problème consiste donc à pouvoir immobiliser une roue du type galette dans un logement prévu pour immobiliser une roue normale afin d'éviter les bruits et les vibrations lorsque la roue du type galette est placée dans le logement.

Lorsque le logement destiné à recevoir la roue de type normal ou de type galette est prévu sous le plancher du véhicule, en général à l'arrière de celui-ci, ce logement est le plus souvent délimité par le plancher du véhicule et/ou une traverse située au-dessous de ce plancher, et un support de roue monté basculant autour d'un axe horizontal entre une position haute d'immobilisation contre le plancher de la roue de type normal ou de type galette et une position d'accès à l'intérieur du logement pour retirer ou mettre en place cette roue.

On connaît dans le FR-A-2 675 762 un adaptateur permettant d'immobiliser une roue du type galette dans un logement tel que décrit précédemment.

Cet adaptateur est constitué d'un fil métallique formant épingle pliée en forme générale de U dont la base et les extrémités libres des branches de l'épingle sont reçues dans une gorge circonférentielle de la jante de la roue du type galette.

Cet adaptateur en forme d'épingle permet d'appliquer la roue de type galette sur son support et également de pouvoir porter celle-ci comme une anse d'un panier.

De plus, cet adaptateur est dimensionné pour s'appuyer contre le plancher du véhicule.

Mais, la présence de nervures sur le plancher du véhicule oblige l'utilisateur à orienter la roue et son adaptateur dans une position plus ou moins précise, ce qui est une contrainte difficilement admissible par l'utilisateur compte tenu de l'emplacement du logement.

L'invention a pour but d'éviter ces inconvénients en proposant un adaptateur destiné à immobiliser une roue de secours du type galette dans un logement prévu pour recevoir et immobiliser une roue de type normal qui est particulièrement facile à mettre en place.

A cet effet, l'invention a pour objet un adaptateur destiné à immobiliser une roue de secours du type galette, pour véhicule automobile, dans un logement prévu pour recevoir et immobiliser une roue normale, le logement comprenant un support monté basculant sous le plancher du véhicule entre une position haute d'immobilisation de la roue normale ou de la roue du type galette, et une position basse d'accès à l'intérieur du logement, caractérisé en ce qu'il comprend un ensemble de tiges reliées entre elles à une de leurs extrémités et dont l'autre extrémité est fixée au plancher du véhicule, lesdites tiges étant conformées pour appliquer la roue du type galette contre le support.

Selon d'autres caractéristiques de l'invention :
- les tiges forment un Y,
- les tiges sont au nombre de trois,
- les tiges sont au nombre de deux, l'une des tiges comportant un coude au niveau de son point de liaison avec une des extrémités de l'autre tige,
- chaque tige est en contact avec la roue du type galette au voisinage de son extrémité fixée au plancher du véhicule,
- les tiges sont fixées de manière amovible au plancher,
- l'extrémité de chaque tige fixée au plancher du véhicule a la forme d'un crochet destiné à pénétrer dans un trou ménagé dans ledit plancher,
- chaque tige comporte, au voisinage de son extrémité fixée au plancher du véhicule, au moins une butée en matériau élastique destinée à s'appuyer sur ledit plancher,
- ladite butée a la forme d'un manchon enfilé sur la tige correspondante,
- le manchon comporte une fente longitudinale,
- une extrémité d'au moins une tige est placée dans le trou correspondant du plancher en exerçant sur cette tige une traction perpendiculairement à son axe.

L'invention sera mieux comprise à la lecture de la description détaillée qui va suivre, faite à titre d'exemple et en référence aux dessins annexés, sur lesquels :
- la Fig. 1 est une vue schématique en coupe représentant un logement destiné à recevoir une roue normale, dans lequel est positionnée une roue du type galette, un adaptateur selon l'invention étant interposé entre la roue du type galette et le plancher du véhicule,
- la Fig. 2 est une vue schématique en perspective d'un premier mode de réalisation d'un adaptateur selon l'invention,
- la Fig. 3 est une vue schématique en perspective d'une butée en matériau élastique montée sur l'adaptateur selon l'invention,
- la Fig. 4 est une vue schématique en perspective d'un second mode de réalisation d'un adaptateur selon l'invention.

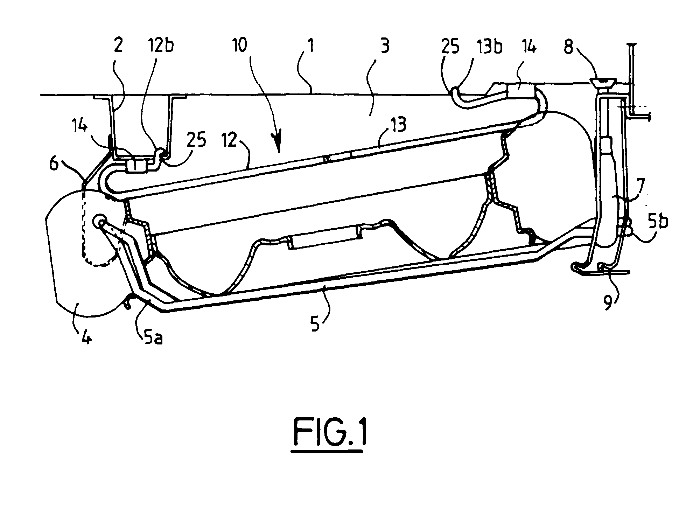

Sur la Fig. 1, on a représenté schématiquement un plancher 1 de véhicule automobile comportant notamment une traverse 2 s'étendant transversalement par rapport à la direction longitudinale dudit véhicule et située au dessous du plancher 1.

Au-dessous du plancher 1 est également prévu un logement 3 destiné à recevoir une roue de secours 4 du type galette.

Le logement 3 est également prévu pour recevoir une roue normale, c'est à dire normalement utilisée sur le véhicule, que celle-ci soit gonflée, crevée ou à plat.

Le logement 3 est équipé d'un support 5 formé par exemple d'une tige métallique pliée en forme d'épingle à cheveux dont les extrémités libres 5a des branches sont inclinées vers le haut par rapport au plan général de l'épingle à cheveux, pour s'écarter de celui-ci.

Ces extrémités libres 5a sont articulées chacune sur au moins une patte 6 faisant saillie vers le bas à partir de la traverse 2.

La base 5b de l'épingle est reçue dans l'extrémité d'un crochet 7 suspendu au plancher 1, la distance entre l'extrémité du crochet 7 et le plancher 1 étant ajustable à l'aide d'une vis 8 dont la tête est située au-dessus du plancher 1, dans le coffre du véhicule par exemple.

Un organe de retenue 9 est également prévu pour maintenir le support 5 dans une position intermédiaire lors de l'actionnement de la vis 8 dans le sens éloignant l'extrémité du crochet 7 du plancher 1, pour pouvoir dans un premier temps dégager l'extrémité du support 5.

L'organe de retenue 9 est déformable élastiquement pour pouvoir être dégagé du support 5 permettant alors à ce dernier de basculer autour des extrémités libres 5a articulées sur les pattes 6, jusqu'à ce que la base du support 5 vienne en contact avec le sol, permettant l'accès au logement 3 et ainsi à la roue 4 située au-dessus du support 5.

Lorsqu'une roue de secours 4 de type galette est disposée dans le logement 3 au-dessus du support 5, cette roue 4 n'est pas immobilisée entre ledit support 5 et le plancher 1 et/ou la traverse 2.

En effet, la dimension axiale d'une roue de secours du type galette est nettement moins importante que la dimension axiale de la jante d'une roue normale.

Afin d'immobiliser la roue 4 du type galette, dans le logement 3, un adaptateur 10 est interposé entre le plancher 1, la traverse 2 et la roue de secours 4 du type galette.

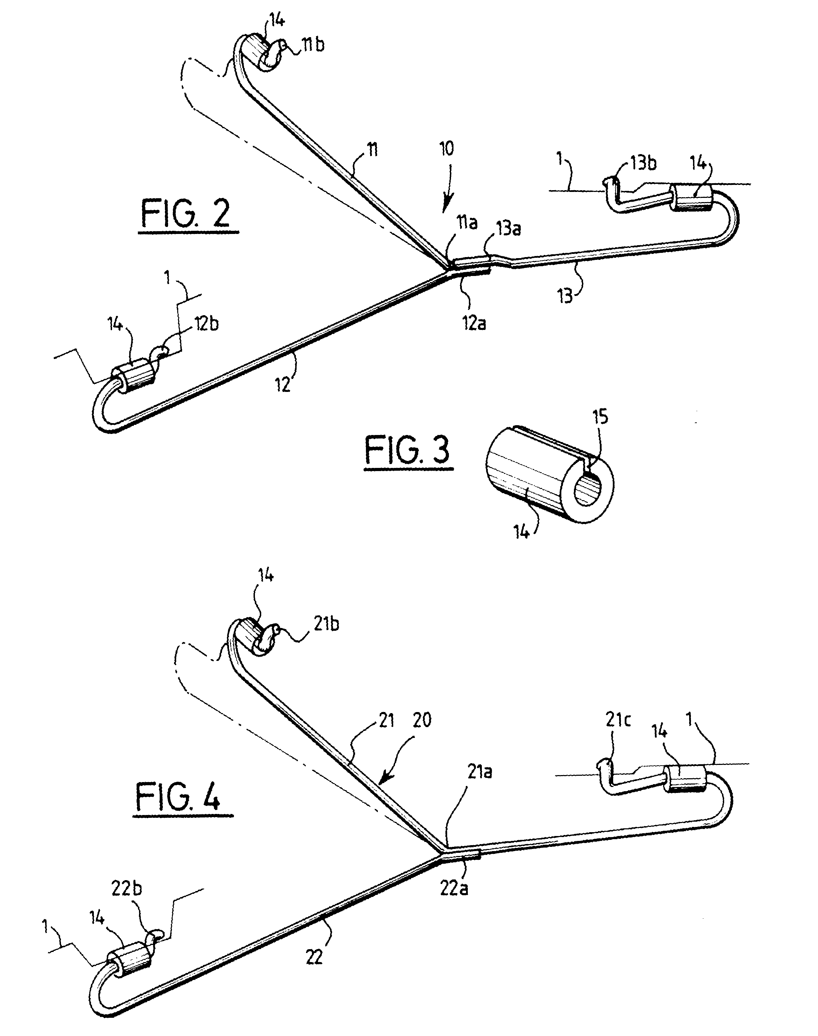

D'une manière générale, l'adaptateur 10 représenté sur les figures 2 et 4 comprend un ensemble de tiges reliées entre elles à une de leurs extrémités et dont l'autre extrémité est fixée au plancher 1 du véhicule.

Selon un premier mode de réalisation représenté à la Fig. 2, l'adaptateur 10 comprend trois tiges, respectivement 11, 12 et 13, formant un Y.

L'extrémité 11a de la tige 11 est reliée par exemple par soudage à l'extrémité 12a de la tige 12 et les extrémités 11a et 12a sont reliées par exemple par soudage à l'extrémité 13a de la tige 13 pour réaliser un ensemble de trois tiges 11, 12 et 13 ayant la forme d'un Y.

Les extrémités libres, respectivement 11b, 12b et 13b des tiges 11, 12 et 13, sont recourbées vers le haut et ont la forme d'un crochet destiné à pénétrer chacun dans un trou 25 ménagé dans le plancher 1 du véhicule automobile.

Les tiges 11, 12 et 13 sont conformées pour appliquer la roue de secours 4 du type galette lorsqu'elle est placée sur le support 5 et que ce support 5 est en position haute d'immobilisation de cette roue 4, comme représenté à la Fig. 1.

Ainsi, chaque tige 11, 12 et 13 est en contact avec la roue 4 du type galette au voisinage de son extrémité 11b, 12b et 13b fixée au plancher 1 du véhicule automobile.

Les tiges 11, 12 et 13 de l'adaptateur 10 sont donc fixées de manière amovible au plancher 1 du véhicule automobile, grâce aux extrémités 11b, 12b et 13b en forme de crochet, ce qui permet de pouvoir mettre en place ou retirer cet adaptateur 10 en fonction de la roue placée dans le logement 3.

Afin d'éviter les bruits et les vibrations lorsque l'adapteur 10 est placé dans le logement 3, chaque tige 11, 12 et 13 comporte, au voisinage de son extrémité 11b, 12b et 13b fixée au plancher 1 du véhicule, au moins une butée 14 en matériau élastique destinée à s'appuyer sur ledit plancher 1 comme représenté à la Fig. 1.

Ainsi que représenté à la Fig. 3, chaque butée 14 a la forme d'un manchon muni d'une fente longitudinale 15 et chaque manchon 14 est enfilé sur l'extrémité de la tige 11, 12 et 13 correspondante.

Pour maintenir l'adaptateur 10 au-dessous du plancher du véhicule, une extrémité, par exemple 11b, de la tige 11 est placée dans le trou 25 correspondant du plancher 1 en exerçant sur cette tige 11 une traction perpendiculairement à son axe, comme représenté en traits mixtes sur la Fig. 2.

Cette disposition permet d'éviter une éjection de l'adaptateur 10 en cas de vibrations importantes, notamment lorsque le logement 3 ne comporte aucune roue.

Selon un second mode de réalisation représenté à la Fig. 4, l'adaptateur 20 est formé par deux tiges 21 et 22 formant un Y.

La tige 21 comporte un coude 21a au niveau de son point de liaison avec l'extrémité 22a de la tige 22 et cette extrémité 22a est fixée au niveau de ce coude 21a de la tige 21 par exemple par soudage.

Les tiges 21 et 22 sont fixées de manière amovible au plancher 1 du véhicule et à cet effet les extrémités libres 21b et 21c de la tige 21 sont recourbées vers le haut et ont la forme d'un crochet, tandis que l'extrémité libre 22b de la tige 22 est également recourbée vers le haut et a la forme d'un crochet.

Les extrémités 21b, 21c et 22b respectivement des tiges 21 et 22 sont destinées à pénétrer chacune dans un trou 25 ménagé dans le plancher 1 du véhicule.

Lorsque l'adaptateur 20 est monté au-dessous du plancher 1 en introduisant les extrémités 21b, 22b et 21c dans les trous 25 correspondant comme représenté à la Fig. 1, chaque tige 21 et 22 est en contact avec la roue de secours 4 du type galette au voisinage des extrémités fixées audit plancher 1.

Afin d'éviter les bruits et les vibrations, chaque tige 21 et 22 comporte, au voisinage des extrémités 21b, 22b et 21c fixées au plancher 1, au moins une butée 14 en matériau élastique destinée à s'appuyer sur ledit plancher 1 lorsque l'adaptateur 20 est monté au-dessous dudit plancher 1, ainsi que représenté à la Fig. 1.

Comme pour le précédent mode de réalisation, la butée 14 a la forme d'un manchon muni d'une fente longitudinale 15 comme cela apparaît à la Fig. 3.

Lors du montage de l'adaptateur 1, l'extrémité, par exemple 21b, de la tige 21 est placée dans le trou 25 correspondant du plancher 1 en exerçant sur cette tige 21 une traction perpendiculairement à son axe, comme représenté en traits mixtes sur la Fig. 4, ce qui permet d'éviter que cet adaptateur se désolidarise du plancher 1 en cas de vibrations importantes et notamment lorsque le logement 3 ne comporte pas de roue.

L'adaptateur 10 ou 20 constitué d'un ensemble de tiges formant un Y permet un appui dans un plan stable et admet une position angulaire quelconque de la roue de secours 4 du type galette dans le logement 3.

L'adaptateur selon l'invention, qui présente l'avantage d'être particulièrement facile à monter dans le logement prévu au-dessous du plancher du véhicule, permet d'immobiliser une roue de secours de type galette dans ce logement également prévu pour une roue normale.

## Revendications

1. Adaptateur (10, 20) destiné à immobiliser une roue de secours (4) du type galette, pour véhicule automobile, dans un logement (3) prévu pour recevoir et immobiliser une roue normale, le logement (3) comprenant un support (5) monté basculant sous le plancher (1) du véhicule entre une position haute d'immobilisation de la roue normale ou de la roue du type galette, et une position basse d'accès à l'intérieur du logement (3), caractérisé en ce qu'il comprend un ensemble de tiges (11, 12, 13 ; 21, 22) reliées entre elles à une de leurs extrémités et dont l'autre extrémité est fixée au plancher (1) du véhicule, lesdites tiges (11, 12,13 ; 21, 22) étant conformées pour appliquer la roue de secours (4) du type galette contre le support (5).

2. Adaptateur selon la revendication 1, caractérisé en ce que les tiges (11, 12, 13 ; 21, 22) forment un Y.

3. Adaptateur selon la revendication 1 et 2, caractérisé en ce que les tiges (11, 12, 13) sont au nombre de trois.

4. Adaptateur selon les revendications 1 et 2, caractérisé en ce que les tiges (21, 22) sont au nombre de deux, l'une (21) des tiges comportant un coude (21a) au niveau de son point de liaison avec une (22a) des extrémités de l'autre tige (22).

5. Adaptateur selon l'une quelconque des revendications 1 à 4, caractérisé en ce que chaque tige (11, 12, 13 ; 21, 22) est en contact avec la roue (4) du type galette au voisinage de son extrémité (11b, 12b, 13b ; 21b, 22b, 21c) fixée au plancher (1) du véhicule.

6. Adaptateur selon l'une quelconque des revendications 1 à 4, caractérisé en ce que les tiges (11, 12, 13 ; 21, 22) sont fixées de manière amovible au plancher (1) du véhicule.

7. Adaptateur selon la revendication 6, caractérisé en ce que l'extrémité (11b, 12b, 13b ; 21b, 22b, 21c) de chaque tige (11, 12, 13 ; 21, 22) fixée au plancher (1) du véhicule a la forme d'un crochet destiné à pénétrer dans un trou (25) ménagé dans ledit plancher (1).

8. Adaptateur selon l'une quelconque des revendications précédentes, caractérisé en ce que chaque tige (11, 12, 13 ; 21, 22) comporte, au voisinage de son extrémité (11b, 12b, 13b ; 21b, 22b, 21c) fixée au plancher (1) du véhicule, au moins une butée (14) en matériau élastique destinée à s'appuyer sur ledit plancher (1).

9. Adaptateur selon la revendication 8, caractérisé en ce que ladite butée (14) a la forme d'un manchon enfilé sur la tige (11, 12, 13 ; 21, 22) correspondante.

10. Adaptateur selon la revendication 9, caractérisé en ce que le manchon (14) comporte une fente longitudinale (15).

11. Adaptateur selon l'une quelconque des revendications précédentes, caractérisé en ce qu'une extrémité d'au moins une tige (11, 12, 13 ; 21, 22) est placée dans le trou (25) correspondant du plancher (1) en exerçant sur cette tige une traction perpendiculairement à son axe.

## Patentansprüche

1. Anpassungsteil (10, 20) zum Fixieren eines scheibenförmigen Notrads (4) für ein Kraftfahrzeug in einem zur Aufnahme und Fixierung eines Normalrads vorgesehenen Raum (3), der ein Tragteil (5) aufweist, das so montiert ist, dass es unter dem Fahrzeugboden (1) zwischen einer oberen, das Normalrad oder das Notrad fixierenden Stellung und einer unteren, den Zugriff zum Inneren des Raums (3) ermöglichenden Stellung schwenkbar ist, dadurch gekennzeichnet, dass das Anpassungsteil eine Anordnung aus Stangen (11, 12, 13; 21, 22) umfasst, die mit je einem ihrer Enden miteinander verbunden sind und deren jeweiliges anderes Ende am Fahrzeugboden (1) befestigt ist, wobei die Stangen (11, 12, 13; 21, 22) in der Weise ausgebildet sind, dass sie das scheibenförmige Notrad (4) an das Tragteil (5) drücken.

2. Anpassungsteil nach Anspruch 1, dadurch gekennzeichnet, dass die Stangen (11, 12, 13; 21, 22) ein "Y" bilden.

3. Anpassungsteil nach Anspruch 1 und 2, dadurch gekennzeichnet, dass die Stückzahl der Stangen (11, 12, 13) drei beträgt.

4. Anpassungsteil nach den Ansprüchen 1 und 2, dadurch gekennzeichnet, dass die Stückzahl der Stangen (21, 22) zwei beträgt, wobei eine (21) der Stangen in dem Bereich der Stelle, wo sie mit einem (22a) der Enden der anderen Stange (22) verbunden ist, einen Winkel (21a) aufweist.

5. Anpassungsteil nach einem der Ansprüche 1 bis 4, dadurch gekennzeichnet, dass jede Stange (11, 12, 13; 21, 22) in der Nachbarschaft ihres am Fahrzeugboden (1) befestigten Endes (11b, 12b, 13b; 21b, 22b, 21c) mit dem Notrad (4) in Berührung steht.

6. Anpassungsteil nach einem der Ansprüche 1 bis 4, dadurch gekennzeichnet, dass die Stangen (11, 12, 13; 21, 22) lösbar am Fahrzeugboden (1) befestigt sind.

7. Anpassungsteil nach Anspruch 6, dadurch gekennzeichnet, dass das am Fahrzeugboden (1) befestigte Ende (11b, 12b, 13b; 21b, 22b, 21c) jeder Stange (11, 12, 13; 21, 22) die Form eines Hakens hat, der dazu bestimmt ist, durch ein im Fahrzeugboden (1) ausgebildetes Loch (25) zu treten.

8. Anpassungsteil nach einem der vorangehenden Ansprüche, dadurch gekennzeichnet, dass jede Stange (11, 12, 13; 21, 22) in der Nachbarschaft ihres am Fahrzeugboden (1) befestigten Endes (11b, 12b, 13b; 21b, 22b, 21c) wenigstens ein Beilagstück (14) aus elastischem Werkstoff aufweist, das dazu bestimmt ist, sich auf den Fahrzeugboden (1) zu stützen.

9. Anpassungsteil nach Anspruch 8, dadurch gekennzeichnet, dass das Beilagstück (14) die Form einer über die betreffende Stange (11, 12, 13; 21, 22) gezogenen Manschette hat.

10. Anpassungsteil nach Anspruch 9, dadurch gekennzeichnet, dass die Manschette (14) einen Längsspalt (15) aufweist.

11. Anpassungsteil nach einem der vorangehenden Ansprüche, dadurch gekennzeichnet, dass ein Ende wenigstens einer Stange (11, 12, 13; 21, 22) in dem zugehörigen Loch (25) des Fahrzeugbodens (1) angeordnet ist und dabei auf diese Stange senkrecht zu deren Achse eine Zugkraft ausübt.

## Claims

1. An adapter (10, 20) for securing a space-saving spare wheel (4), for a motor vehicle, in a housing (3) provided for receiving and securing a standard wheel, the housing (3) comprising a support (5) mounted under the floor (1) of the vehicle so as to be pivotable between a high position for securing the standard wheel or the space-saving wheel, and a low position providing access to the interior of the housing (3), characterised in that it comprises an assembly of rods (11, 12, 13; 21, 22) interconnected at one of their ends and fixed to the floor (1) of the vehicle at the other end, the said rods (11, 12, 13; 21, 22) being formed so as to press the space-saving spare wheel (4) against the support (5).

2. An adapter according to claim 1, characterised in that the rods (11, 12, 13; 21, 22) form a Y.

3. An adapter according to claims 1 and 2, characterised in that there are three rods (11, 12, 13).

4. An adapter according to claims 1 and 2, characterised in that there are two rods (21, 22), one (21) of the rods comprising an elbow (21a) at its point of connection to one (22a) of the ends of the other rod (22).

5. An adapter according to any one of claims 1 to 4, characterised in that each rod (11, 12, 13; 21, 22) is in contact with the space-saving wheel (4) in the vicinity of its end (11b, 12b, 13b; 21b, 22b, 21c) fixed to the floor (1) of the vehicle.

6. An adapter according to any one of claims 1 to 4, characterised in that the rods (11, 12, 13; 21, 22) are detachably fixed to the floor (1) of the vehicle.

7. An adapter according to claim 6, characterised in that the end (11b, 12b, 13b; 21b, 22b, 21c) of each rod (11, 12, 13; 21, 22) fixed to the floor (1) of the vehicle is in the form of a hook intended to engage in a hole (25) provided in the said floor (1).

8. An adapter according to any one of the preceding claims, characterised in that each rod (11, 12, 13; 21, 22) comprises, in the vicinity of its end (11b, 12b, 13b; 21b, 22b, 21c) fixed to the floor (1) of the vehicle, at least one stop (14) of resilient material intended to rest against the said floor (1).

9. An adapter according to claim 8, characterised in that the said stop (14) is in the form of a sleeve mounted on the corresponding rod (11, 12, 13; 21, 22).

10. An adapter according to claim 9, characterised in that the sleeve (14) comprises a longitudinal slot (15).

11. An adapter according to any one of the preceding claims, characterised in that one end of at least one rod (11, 12, 13; 21, 22) is inserted into the corresponding hole (25) in the floor (1) by exerting thrust on this rod perpendicular to its axis.
